# EUROPEAN PATENT SPECIFICATION

(11) **EP 1 570 721 B1**
(45) Date of publication and mention of the grant of the patent: **20.10.2010**
(21) Application number: 05251240.7
(22) Date of filing: 02.03.2005
(51) Int. Cl.: A01D 34/82

(54) **Lawnmower**
Rasenmäher
Tondeuse à gazon

(30) Priority: 04.03.2004 GB 0404900
(43) Date of publication of application: 07.09.2005
(73) Proprietor: Husqvarna AB, 561 82 Huskvarna (SE)
(72) Inventor: Coates, Neil A., Sedgefield, County Durham TS21 3AX (GB); Stockley, Paul, Aycliffe, County Durham DL5 6SA (GB)

(56) References cited:
- EP-A- 0 268 571
- DE-A1- 2 708 483
- FR-A- 2 399 200
- FR-A- 2 419 002
- US-A- 4 015 407

## Description

This invention relates to a lawnmower, and in particular to a lawnmower which includes a deck defining a cutting chamber housing a rotary cutter blade which is driven by a motor mounted on the deck.

The invention is applicable to both a so-called "wheeled rotary lawnmower" which includes wheels for mounting the deck, and a hover mower which, in use, has its deck supported above ground datum by air pressure within the deck. The motor may be an electric motor or a petrol-fuelled internal combustion engine.

The noise generated by either a wheeled rotary lawnmower or a hover mower is substantial. This noise is a combination of the noise of the engine itself, and that of the rotating blade and, for a hover mower, its impeller (fan). A standard petrol mower engine is typically a single cylinder, two or four stroke unit with a horizontally-acting piston driving a crank on a vertical output shaft. The rotary cutter blade is fixed to the output shaft for rotation therewith.

It is common practice for a lawnmower engine to be attached rigidly to the deck using three bolts in a standard SAE J609A mounting pattern. Because of the rigid attachment, engine vibrations are transmitted to the deck, causing the deck to vibrate and produce noise. An engine positioned on a heavy steel test platform typically generates 89dB(A). Mounting the engine on the deck, however, can typically increase this noise by up to 1.5dB(A).

The noise generated by a typical rotating blade for such a lawnmower is 92dB(A). These values relate to a typical petrol wheeled rotary lawnmower with a blade diameter of less than 50cm. Consequently, the total noise generated is about 94dB(A). This is, of course, subject to production variances such as engine speed and vibration levels, and these can effect the result by up to ±2dB(A).

Ever more stringent environmental noise limits require manufacturers to reduce the noise generated by lawnmowers. Given that it is difficult to reduce the noise generated by the engine, one possible way of reducing noise is to lower vibration levels in the deck. This can be achieved by isolating it from the source of the vibration, that is to say the engine, the blade and (where applicable) the fan.

It is well known to isolate a vibrating source by mounting it using flexible buffers. Isolation mounts have been used for many years by the automotive industry for isolating engine and transmission vibrations from the structure of vehicles. A commonly-used isolation mount includes a metal stud bonded to a flexible bush made, for example, of rubber or other resilient material. Usually, a number of these mounts are used to support an automobile engine.

An example of a prior art walk-behind lawnmower is described in DE-A-27 08 483. This lawnmower is provided with a distance ring arranged between the cutting deck and the engine. The distance ring is made of a vibration damping or insulating material.

Through-bolt connections are sometimes used where joint integrity is of paramount importance, but these are generally less effective as clamping can limit movement and provides a better path for vibrations to be transmitted.

Mounts of this common type are not suitable for lawnmowers. In particular, such mounts raise the lawnmower engine and create a gap through which blade noise escapes, thereby increasing the overall noise produced by the lawnmower. Joint integrity is another issue, because the bonding between the studs and their bushes is relied upon to hold the engine and blade assembly in place and the overall bond area is small. Bonded mounts of this type are also very weak when in tension, and it is not uncommon for a customer to lift the lawnmower by holding the engine, and this can fracture the bonds leading to the possibility of the engine breaking away from the lawnmower deck.

Owing to the low cost nature of the application, other vibration-reducing technologies commonly used elsewhere, such as extra balancing shafts, are cost prohibitive and cannot be used in lawnmowers. Cost and simplicity dictate that lawnmower engines suffer from problems with imbalance. These imbalance problems exacerbate the vibration levels transmitted by a lawnmower engine to the deck of the lawnmower.

The present invention provides a lawnmower comprising a deck defining a downwardly-open cutting chamber, a rotary cutter mounted within the cutting chamber, and a prime mover mounted above the deck, the prime mover being in rotatable driving engagement with the rotary cutter, wherein the prime mover is mounted on the deck with the interposition of an isolation ring of damping material, and wherein the isolation ring is sandwiched between first and second annular plates.

In a first embodiment the first annular plate is fixed to the prime mover, and the second annular plate is fixed to the deck, while the isolation ring is bonded to the first and second annular plates.

Advantageously, the first annular plate is fixed to the prime mover by fixing members extending upwardly therefrom, and the second annular plate is connected to the deck by fixing members extending downwardly therefrom.

Conveniently, one of the annular plates is provided with a plurality of tabs, and the other annular plate is provided with a respective plurality of apertured flanges, the arrangement being such that, in use, the tabs pass through the apertures of the flanges.

Preferably, the tabs extend outwardly with respect to said one annular plate and the flanges extend outwardly with respect to said other annular plate.

Advantageously, the flanges each have an L-shaped profile.

Conveniently, said one annular plate is provided with a pair of tabs, and said other annular plate is provided with a pair of flanges

In a second embodiment, the isolation ring is constituted by first and second ring members, the first ring member being fixed to the first annular plate, the second ring member being fixed to the second annular plate. In this case, the ring members may be positioned, in use, on opposite sides of the deck, and the prime mover may be mounted above the deck by a plurality of fixing members, each of which extends upwardly from the upper surface of the second annular plate, through both ring members and a respective aperture in the deck for fixing to the prime mover, a respective clearance being provided between each fixing member and the associated deck aperture.

Preferably, each of the fixing members is constituted by a stud integrally formed with the second annular plate, each stud having a threaded end portion which passes through a respective aperture in a mounting flange of the prime mover for engagement with a respective nut.

Advantageously, the deck is formed with an opening in its upper surface, and the isolation ring is fixed to the deck so as to surround the opening. Air movement caused by the rotation of the cutter does, therefore, flow over, and cool the base of the prime mover.

Preferably, the isolation ring forms a substantially airtight seal between the deck and the prime mover. This seal helps to reduce the noise generated by the rotary cutter escaping to the outside of the lawnmower.

The invention will now be described in greater detail, by way of example, with reference to the drawings, in which:-
Figure 1 is a perspective view of a lawnmower provided with an isolation mount constructed in accordance with the invention;
Figure 2 is a perspective view of the isolation mount of the lawnmower of Figure 1; and
Figure 3 is a cross-sectional view of part of a modified form of isolation mount for use with the lawnmower of Figure 1.

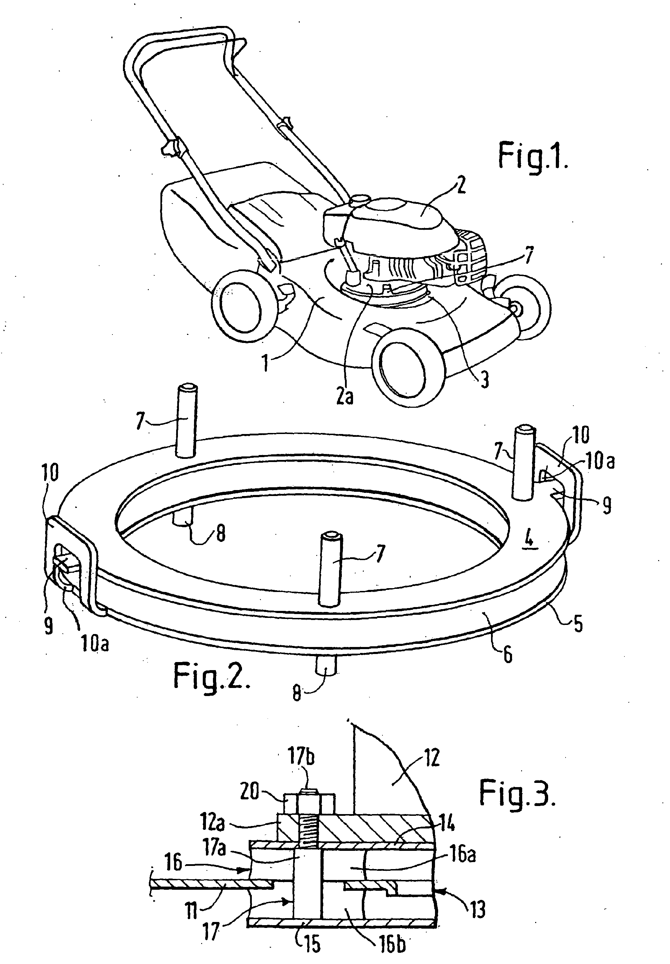

Referring to the drawings, Figure 1 shows a wheeled rotary lawnmower having a deck 1 which defines a downwardly-open cutting chamber (not shown) which houses a rotary cutting member (not shown). A petrol-fuelled internal combustion engine 2 is mounted on the deck 1 by means of an isolation mount indicated generally by the reference numeral 3.

The isolation mount 3 is shown in greater detail in Figure 2, and is constituted by first and second annular plates 4 and 5 which are bonded to a ring 6 made of a high damping, flexible, rubber-like material such as modified natural rubber or polyurethane. The annular plate 4 is fixed to a mounting flange 2a of the engine 2 by means of three threaded studs 7 which are positioned in the standard SAE J609A positions, and extend upwardly from the upper surface of that annular plate. Similarly, the annular plate 5 is fixed to the deck 1 by means of three threaded studs 8 which are positioned in the standard SAE J609A positions, and extend downwardly from the lower surface of that annular plate. The annular plates 4 and 5 are made of mild steel.

A pair of diametrically-opposed tabs 9 extend outwardly from the annular plate 4, these tabs co-operating with apertures 10a formed in L-shaped flanges 10 which extend outwardly from the annular plate 5 at diametrically-opposed positions. Under normal operating conditions, with the ring 6 firmly bonded to the annular plates 4 and 5, the tabs 9 pass through the apertures 10a with an all round clearance, so as not to transmit vibrations from the engine 2 to the deck 1 by contact between the two annular plates. In the event of bond failure, however, the tabs 9 engage with the edges of the apertures 10a to prevent the engine 2 from becoming detached from the deck 1.

The flexible material of the ring 6 deforms under the complex loads applied by the engine 2, and a small amount of the energy is dissipated as heat in this process. The stiffness of the ring 6 is "tuned" to ensure that the natural frequency of the system is out of synchronisation with the engine's forcing frequency, thereby limiting the level of excitation of the structure of the deck 1.

The design of the ring 6 provides a large surface area for the bond to each of the plates 4 and 5, thereby resulting in a sufficiently strong bond to cope with the loads associated with normal use of the lawnmower. If, however, the isolation mount 3 is subjected to abnormal loads, for example, when the rotary cutting member hits a solid object or when the lawnmower is lifted by the engine 2, the isolation mount incorporates mechanical restraints (the tabs 9 and the L-shaped flanges 10) which limit movement of the engine relative to the deck, and hence limit the tensile and shear loads applied to the ring 6, keeping them at a safe level.

The mechanical restraint system uses no additional parts, and the tabs 9 and flanges 10 are positioned such that they do not substantially increase the blank size from which the plates 4 and 5 are stamped. The restraint system is, therefore, very cost effective. Once the ring 6 is bonded to the plates 4 and 5, a secondary operation is needed to bend the flanges 10 into their hooped, L-shaped configuration.

By using a continuous ring 6 of isolating material, a good air seal is maintained between the deck 1 and the engine 2, thereby substantially reducing blade noise escaping from the cutting chamber to the outside. Moreover, because the underside of the engine 2 is exposed to the interior of the cutting chamber (a circular aperture being formed in the top of the deck 1 - the diameter of which is substantially equal to the internal diameter of the ring-shaped assembly constituted by the ring and of the plates 4 and 5), the engine benefits from the cooling effect of air movement resulting from the rotation of the cutting member. This cooling effect is important as it reduces heat transfer from the engine 2 to the isolation mount 3, the material of the ring 6 not being as effective at elevated temperatures.

Figure 3 shows a part of a modified form of isolation mount 13. The isolation mount 13 is constituted by first and second isolation rings 16a and 16b, these rings being bonded respectively to first and second annular plates 14 and 15. Three threaded studs 17 are formed integrally with the second annular plate 15, the studs being positioned in the standard SAE positions. Each stud 17 has an unthreaded portion 17a which passes through complementary apertures in the rings 16a and 16b, and an inwardly-stepped threaded portion 17b which passes through an aperture in the mounting flange 12a of the engine 12 for engagement with a nut 20. The rings 16a and 16b sandwich the deck 11, and the studs 17 secure the engine 12 to the deck, whilst providing a clamping force to clamp the deck between the two isolation rings 16a and 16b.

In addition to the clamping force, the isolation rings 16a and 16b have protrusions (not shown) for physically locating the rings in complementary recesses provided on both sides of the deck 11. The assembly is such that there is no physical contact between the studs 17 and the deck 11.

An advantage of sandwiching the isolation ring 6 or 16a/16b between the first and second annular plates 4 and 5 or 14 and 15 is that the lawnmower can be assembled easily, as the sandwiched arrangement is, in either case, a rigid unitary member that can be bolted to the lawnmower deck 1. This is to be contrasted with known isolation mounts (such as a simple annular ring made of a flexible material) which is difficult to locate accurately during assembly. This is particularly the case where assembly of the engine to the deck of the lawnmower requires the lawnmower to be turned upside-down to facilitate fixing of the engine to the deck by means of bolts.

Another advantage of the sandwich construction of the isolation mount is that the amount of pre-load or compression of the ring 6 or rings 16a and 16b does not depend on the torque applied to the bolts which are used to fix the engine to the deck.

The advantage of the arrangement shown in Figure 3 is that the engine 12 is held captive by the studs 17, and does not rely for its retention up on bonds between the plates 14 and 15 and the isolation rings 16a and 16b. Consequently, the engine 12 will be held in place on the deck 11 even if the bond between the isolation rings 16a and 16b and the plates 14 and 15 is broken.

It will be apparent that modifications could be made to the isolation mounts described above. For example, the isolation rings do not need to be circular in configuration, it being possible to utilise oval or generally rectangular isolation "rings". The isolation mounts described could also be used with lawnmowers powered by electric motors.

## Claims

1. A lawnmower comprising a deck (1) defining a downwardly-open cutting chamber, a rotary cutter mounted within the cutting chamber, and a prime mover (2,12) mounted above the deck (1), the prime mover (2,12) being in rotatable driving engagement with the rotary cutter, wherein the prime mover (2,12) is mounted on the deck (1) with the interposition of an isolation ring(6) of damping material, **characterized in that** the isolation ring (6) is sandwiched between first and second annular plates (4,5), the first annular plate (4) is fixed to the prime mover (2,12), and the second annular plate (5) is fixed to the deck (1), and **in that** the isolation ring (6) is bonded to the first and second annular plates (4,5).

2. A lawnmower as claimed in claim 1, wherein the first annular plate (4) is fixed to the prime mover (2,12) by fixing members (7) extending upwardly therefrom, and the second annular plate (5) is connected to the deck (1) by fixing members (8) extending downwardly therefrom.

3. A lawnmower as claimed in any one of claims 1 or 2, wherein one of the annular plates (4,5) is provided with a plurality of tabs (9), and the other annular plate (4,5) is provided with a respective plurality of apertured flanges (10), the arrangement being such that, in use, the tabs (9) pass through the apertures (10a) of the flanges 10.

4. A lawnmower as claimed in claim 3, wherein the tabs (9) extend outwardly with respect to said one annular plate (4,5) , and the flanges (10) extend outwardly with respect to said other annular plate (4,5).

5. A lawnmower as claimed in claim 3 or claim 4, wherein the flanges (10) each have a substantally L-shaped profile.

6. A lawnmower as claimed in any one of claims 3 to 5, wherein said one annular plate (4,5) is provided with a pair of tabs (9), and said other annular plate (4,5) is provided with a pair of flanges (10).

7. A lawnmower comprising a deck (1) defining a downwardly-open cutting chamber, a rotary cutter mounted within the cutting chamber, and a prime mover (2,12) mounted above the deck (1), the prime mover (2,12) being in rotatable driving engagement with the rotary cutter, wherein the prime mover (2,12) is mounted on the deck (1) with the interposition of an isolation ring (6) of damping material, **characterized in that** the isolation ring (6) is sandwiched between first and second annular plates (14,15), the isolation ring (6) is constituted by first and second ring members (16a,16b), the first ring member (16a) being fixed to the first annular plate (14), and the second ring member (16b) being fixed to the second annular plate (15).

8. A lawnmower as claimed in claim 7, wherein the ring members (16a,16b) are positioned, in use, on opposite sides of the deck (1,11), and wherein the prime mover (2,12) is mounted above the deck (1) by a plurality of fixing members (17), each of which extends upwardly from the upper surface of the second annular plate (15), through both ring members (16a,16b) and a respective aperture in the deck (1) for fixing to the prime mover (2,12), a respective clearance being provided between each fixing member (17) and the associated deck aperture.

9. A lawnmower as claimed in claim 8, wherein each of the fixing members (17) is constituted by a stud (17) integrally formed with the second annular plate (15), each stud (17) having a threaded end portion (17b) which passes through a respective aperture in a mounting flange (12a) of the prime mover (2,12) for engagement with a respective nut (20).

10. A lawnmower as claimed in any one of claims 1 to 9, wherein the deck (1) is formed with an opening in its upper surface, and the isolation ring (6) is fixed to the deck (1) so as to surround the opening.

11. A lawnmower as claimed in claim 10, wherein the isolation ring (6) forms a substantially airtight seal between the deck (1) and the prime mover (2,12).

12. A lawnmower as claimed in any one of claims 1 to 11, wherein the prime mover (2,12) is a petrol powered internal combustion engine.

13. A lawnmower as claimed in any one of claims 1 to 12, wherein the prime mover (2,12) is an electric motor.

14. A lawnmower as claimed in any one of claims 1 to 13, wherein the damping material is a flexible, rubber-like material such as modified natural rubber or polyurethane.

## Patentansprüche

1. Rasenmäher, welcher ein Abdeckgehäuse (1), das eine nach unten offene Schneidkammer definiert, eine innerhalb des Abdeckgehäuses angebrachte Rotorschneidvorrichtung und einen über dem Abdeckgehäuse (1) angebrachten Primärantrieb (2, 12) umfasst, wobei der Primärantrieb (2, 12) mit der Rotorschneidvorrichtung in rotierendem Antriebseingriff steht, wobei der Primärantrieb (2, 12) mit einem dazwischen angeordneten Isolationsring (6) aus einem dämpfenden Material auf dem Abdeckgehäuse (1) angebracht ist, **dadurch gekennzeichnet, dass** der Isolationsring (6) zwischen einer ersten und zweiten ringförmigen Platte (4, 5) eingebettet ist, dass die erste ringförmige Platte (4) an dem Primärantrieb (2, 12) befestigt ist und die zweite ringförmige Platte (5) an dem Abdeckgehäuse (1) befestigt ist, und dass der Isolationsring (6) mit der ersten und zweiten ringförmigen Platte (4, 5) verbunden ist.

2. Rasenmäher nach Anspruch 1, wobei die erste ringförmige Platte (4) durch Befestigungselemente (7) an dem Primärantrieb (2, 12) befestigt ist, welche sich von dieser aus nach oben erstrecken, und die zweite ringförmige Platte (5) durch Befestigungselemente (8) mit dem Abdeckgehäuse (1) verbunden ist, welche sich von dieser aus nach unten erstrecken.

3. Rasenmäher nach einem der Ansprüche 1 oder 2, wobei eine der ringförmigen Platten (4, 5) mit mehreren Mitnehmern (9) versehen ist und die andere ringförmige Platte (4, 5) entsprechend mit mehreren Lochflanschen (10) versehen ist, wobei diese so angeordnet sind, dass die Mitnehmer (9) im Gebrauch durch die Löcher (10a) der Flansche (10) durchgehen.

4. Rasenmäher nach Anspruch 3, wobei sich die Mitnehmer (9) in Bezug auf die eine ringförmige Platte (4, 5) nach außen erstrecken und die Flansche (10) sich in Bezug auf die andere ringförmige Platte (4, 5) nach außen erstrecken.

5. Rasenmäher nach Anspruch 3 oder 4, wobei die Flansche (10) jeweils ein im Wesentlichen L-förmiges Profil aufweisen.

6. Rasenmäher nach einem der Ansprüche 3 bis 5, wobei die eine ringförmige Platte (4, 5) mit einem Mitnehmerpaar (9) versehen ist und die andere ringförmige Platte (4, 5) mit einem Flanschpaar (10) versehen ist.

7. Rasenmäher, welcher ein Abdeckgehäuse (1), das eine nach unten offene Schneidkammer definiert, eine innerhalb des Abdeckgehäuses angebrachte Rotorschneidvorrichtung und einen über dem Abdeckgehäuse (1) angebrachten Primärantrieb (2, 12) umfasst, wobei der Primärantrieb (2, 12) mit der Rotorschneidvorrichtung in rotierendem Antriebseingriff steht, wobei der Primärantrieb (2, 12) mit einem dazwischen angeordneten Isolationsring (6) aus einem dämpfenden Material auf dem Abdeckgehäuse (1) angebracht ist, **dadurch gekennzeichnet, dass** der Isolationsring (6) zwischen einer ersten und zweiten ringförmigen Platte (14, 15) eingebettet ist, dass der Isolationsring aus einem ersten und zweiten Ringelement (16a, 16b) aufgebaut ist, wobei das erste Ringelement (16a) an der ersten ringförmigen Platte (14) befestigt ist und das zweite Ringelement (16b) an der zweiten ringförmigen Platte (15) befestigt ist.

8. Rasenmäher nach Anspruch 7, wobei die Ringelemente (16a, 16b) im Gebrauch an gegenüberliegenden Seiten des Abdeckgehäuses (1, 11) angeordnet sind und wobei der Primärantrieb (2, 12) durch mehrere Befestigungselemente (17) über dem Abdeckgehäuse (1) angebracht ist, welche sich jeweils von der oberen Fläche der zweiten ringförmigen Platte (15) aus durch beide Ringelemente (16a, 16b) und eine entsprechende Öffnung in dem Abdeckgehäuse (1) zur Befestigung des Primärantriebs (2, 12) hindurch nach oben erstrecken, wobei zwischen jedem Befestigungselement (17) und der zugehörigen Öffnung im Abdeckgehäuse für einen entsprechenden Spielraum gesorgt ist.

9. Rasenmäher nach Anspruch 8, wobei jedes der Befestigungselemente (17) aus einem Stift (17) aufgebaut ist, der mit der zweiten ringförmigen Platte (15) integriert ausgebildet ist, wobei jeder Stift (17) einen Gewinde-Endabschnitt (17b) aufweist, welcher zur Verrastung mit einer entsprechenden Mutter (20) durch eine entsprechende Öffnung in einem Befestigungsflansch (12a) des Primärantriebs (2, 12) führt.

10. Rasenmäher nach einem der Ansprüche 1 bis 9, wobei das Abdeckgehäuse (1) mit einer Öffnung in seiner oberen Fläche ausgebildet ist und der Isolationsring (6) derart an dem Abdeckgehäuse (1) befestigt ist, dass er die Öffnung umgibt.

11. Rasenmäher nach Anspruch 10, wobei der Isolationsring (6) eine im Wesentlichen luftdichte Versiegelung zwischen dem Abdeckgehäuse (1) und dem Primärantrieb (2, 12) bildet.

12. Rasenmäher nach einem der Ansprüche 1 bis 11, wobei es sich bei dem Primärantrieb (2, 12) um einen Benzinverbrennungsmotor handelt.

13. Rasenmäher nach einem der Ansprüche 1 bis 12, wobei es sich bei dem Primärantrieb (2, 12) um einen Elektromotor handelt.

14. Rasenmäher nach einem der Ansprüche 1 bis 13, wobei es sich bei dem dämpfenden Material um ein flexibles, gummiartiges Material wie modifizierten Naturkautschuk oder Polyurethan handelt.

## Revendications

1. Tondeuse à gazon, comprenant un carter (1) qui définit une chambre de coupe ouverte en bas, une lame de coupe rotative montée à l'intérieur de la chambre de coupe, et une machine motrice (2, 12) montée au-dessus du carter (1), la machine motrice (2, 12) étant en prise avec la lame de coupe rotative de manière à pouvoir l'entraîner en rotation, dans laquelle la machine motrice (2, 12) est montée sur le carter (1) en intercalant une bague isolante (6) en matériau amortisseur, **caractérisée en ce que** la bague isolante (6) est prise en sandwich entre un premier et un deuxième flasque annulaire (4, 5), le premier flasque annulaire (4) étant fixé à la machine motrice (2, 12) et le deuxième flasque annulaire (5) fixé au carter (1), et **en ce que** la bague isolante (6) est collée aux premier et deuxième flasques annulaires (4, 5).

2. Tondeuse à gazon selon la revendication 1, dans laquelle le premier flasque annulaire (4) est fixé à la machine motrice (2, 12) au moyen d'éléments de fixation (7) qui s'étendent vers le haut à partir dudit premier flasque et le deuxième flasque annulaire (5) est relié au carter (1) par des éléments de fixation (8) qui s'étendent vers le bas à partir dudit deuxième flasque.

3. Tondeuse à gazon selon l'une quelconque des revendications 1 ou 2, dans laquelle l'un des flasques annulaires (4, 5) est muni d'une pluralité de languettes (9) et l'autre flasque annulaire (4, 5) est muni d'une pluralité correspondante de pattes ajourées (10), la disposition étant telle que, à l'utilisation, les languettes (9) s'engagent dans les ouvertures (10a) des pattes (10).

4. Tondeuse à gazon selon la revendication 3, dans laquelle les languettes (9) s'étendent vers l'extérieur par rapport à l'un desdits flasques annulaires (4, 5) et les pattes (10) s'étendent vers l'extérieur par rapport à l'autre flasque annulaire (4, 5).

5. Tondeuse à gazon selon la revendication 3 ou la revendication 4, dans laquelle les pattes (10) ont chacune un profil sensiblement en forme de L.

6. Tondeuse à gazon selon l'une quelconque des revendications 3 à 5, dans laquelle l'un desdits flasques annulaires (4, 5) est muni d'une paire de languettes (9) et l'autre flasque annulaire (4, 5) est muni d'une paire de pattes (10).

7. Tondeuse à gazon, comprenant un carter (1) qui définit une chambre de coupe ouverte en bas, une lame de coupe rotative montée à l'intérieur de la chambre de coupe, et une machine motrice (2, 12) montée au-dessus du carter (1), la machine motrice (2, 12) étant en prise avec la lame de coupe rotative de manière à pouvoir l'entraîner en rotation, dans laquelle la machine motrice (2, 12) est montée sur le carter (1) en intercalant une bague isolante (6) en matériau amortisseur, **caractérisée en ce que** la bague isolante (6) est prise en sandwich entre un premier et un deuxième flasque annulaire (14, 15), laquelle bague isolante (6) est constituée par un premier et un deuxième élément annulaire (16a, 16b), le premier élément annulaire (16a) étant fixé au premier flasque annulaire (14) et le deuxième élément annulaire (16b) fixé au deuxième flasque annulaire (15).

8. Tondeuse à gazon selon la revendication 7, dans laquelle les éléments annulaires (16a, 16b) sont positionnés, à l'utilisation, sur des côtés opposés du carter (1, 11) et dans laquelle la machine motrice (2, 12) est montée au-dessus du carter (1) au moyen d'une pluralité d'éléments de fixation (17) dont chacun s'étend vers le haut à partir de la surface supérieure du deuxième flasque annulaire (15) et à travers les deux éléments annulaires (16a, 16b) et une ouverture correspondante ménagée dans le carter (1) pour la fixation à la machine motrice (2, 12), un jeu respectif étant prévu entre chaque élément de fixation (17) et l'ouverture associée du carter.

9. Tondeuse à gazon selon la revendication 8, dans laquelle chacun des éléments de fixation (17) est constitué d'un goujon (17) formé d'un seul tenant avec le deuxième flasque annulaire (15), chaque goujon (17) présentant une partie d'extrémité filetée (17b) qui traverse une ouverture correspondante d'une bride de montage (12a) de la machine motrice (2, 12) pour s'engager dans un écrou respectif (20).

10. Tondeuse à gazon selon l'une quelconque des revendications 1 à 9, dans laquelle le carter (1) est formé avec une ouverture dans sa surface supérieure et la bague isolante (6) est fixée au carter (1) de manière à entourer ladite ouverture.

11. Tondeuse à gazon selon la revendication 10, dans laquelle la bague isolante (6) forme un joint pratiquement étanche à l'air entre le carter (1) et la machine motrice (2, 12).

12. Tondeuse à gazon selon l'une quelconque des revendications 1 à 11, dans laquelle la machine motrice (2, 12) est un moteur à combustion interne fonctionnant à l'essence.

13. Tondeuse à gazon selon l'une quelconque des revendications 1 à 12, dans laquelle la machine motrice (2, 12) est un moteur électrique.

14. Tondeuse à gazon selon l'une quelconque des revendications 1 à 13, dans laquelle le matériau amortisseur est un matériau souple caoutchoutique tel que du caoutchouc naturel modifié ou du polyuréthane.
